(19) **Europäisches Patentamt / European Patent Office / Office européen des brevets**

(11) **EP 4 085 119 B1**

(12) **FASCICULE DE BREVET EUROPEEN**

(45) Date de publication et mention de la délivrance du brevet:
**01.07.2026 Bulletin 2026/27**

(21) Numéro de dépôt: **20851292.1**

(22) Date de dépôt: **28.12.2020**

(51) Classification Internationale des Brevets (IPC):
$C10G\ 9/00\ ^{(2006.01)}$  $C10G\ 9/28\ ^{(2006.01)}$
$C10G\ 47/22\ ^{(2006.01)}$  $C10G\ 47/24\ ^{(2006.01)}$
$C10G\ 49/10\ ^{(2006.01)}$  $C10B\ 55/04\ ^{(2006.01)}$
$B01J\ 8/00\ ^{(2006.01)}$  $B01J\ 8/08\ ^{(2006.01)}$
$B01J\ 8/32\ ^{(2006.01)}$  $F23C\ 10/02\ ^{(2006.01)}$
$B01J\ 8/18\ ^{(2006.01)}$  $B01J\ 8/26\ ^{(2006.01)}$
$B01J\ 19/00\ ^{(2006.01)}$  $B01J\ 19/24\ ^{(2006.01)}$
$C10B\ 55/10\ ^{(2006.01)}$  $F23C\ 6/04\ ^{(2006.01)}$
$F23C\ 10/00\ ^{(2006.01)}$  $F23C\ 10/26\ ^{(2006.01)}$
$F23C\ 10/30\ ^{(2006.01)}$  $F23C\ 10/10\ ^{(2006.01)}$

(52) Classification Coopérative des Brevets (CPC):
**C10G 9/005; B01J 8/0015; B01J 8/0095;
B01J 8/08; B01J 8/1827; B01J 8/1863; B01J 8/26;
B01J 8/32; B01J 19/0013; B01J 19/2405;
B01J 19/245; B01J 19/2465; C10B 55/04;
C10B 55/10; C10G 9/28;** (Cont.)

(86) Numéro de dépôt international:
**PCT/FR2020/052630**

(87) Numéro de publication internationale:
**WO 2021/136912 (08.07.2021 Gazette 2021/27)**

(54) **PROCEDE INTEGRE DE CONVERSION THERMIQUE D'UNE CHARGE HYDROCARBONEE LOURDE ET DE COMBUSTION INDIRECTE EN BOUCLE CHIMIQUE D'OXYDO-REDUCTION POUR LA PRODUCTION DE FLUX HYDROCARBONES ET LE CAPTAGE DU COPRODUIT**

INTEGRIERTES VERFAHREN ZUR THERMISCHEN UMWANDLUNG UND INDIREKTEN VERBRENNUNG EINES SCHWEREN KOHLENWASSERSTOFFEINSATZMATERIALS IN EINER CHEMISCHEN REDOX-SCHLEIFE ZUR HERSTELLUNG VON KOHLENWASSERSTOFFSTRÖMEN UND ABSCHEIDUNG DER KOPRODUKTE

INTEGRATED METHOD FOR THERMAL CONVERSION AND INDIRECT COMBUSTION OF A HEAVY HYDROCARBON FEEDSTOCK IN A REDOX CHEMICAL LOOP FOR PRODUCING HYDROCARBON STREAMS AND CAPTURING THE COPRODUCED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2019 FR 1915705**

(43) Date de publication de la demande:
**09.11.2022 Bulletin 2022/45**

(73) Titulaires:
• **TotalEnergies OneTech
92400 Courbevoie (FR)**
• **IFP Energies nouvelles
92852 Rueil-Malmaison Cedex (FR)**

(72) Inventeur: **LEPLAT, Sébastien
14600 HONFLEUR (FR)**

(74) Mandataire: **Fédit-Loriot
22, rue du Général Foy
75008 Paris (FR)**

(56) Documents cités:
**FR-A1- 2 980 258    US-A1- 2017 313 947
US-B1- 9 707 532**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)**C10G 47/22; C10G 47/24; C10G 49/10;
F23C 6/04; F23C 10/005; F23C 10/10; F23C 10/26;
F23C 10/30;** F23C 2900/99008; Y02P 20/129;
Y02P 30/40

**Description**

Domaine de l'invention

L'invention a pour objet un procédé intégré de conversion thermique d'une charge hydrocarbonée lourde et de combustion indirecte en boucle chimique d'oxydoréduction pour la production de flux hydrocarbonés tout en captant les gaz émis lors de la combustion, et plus particulièrement le $CO_2$. L'invention est particulièrement adaptée au traitement de charges hydrocarbonées lourdes qui ne sont pas sous forme solide, et qui contiennent en particulier des teneurs élevées en soufre.

Art antérieur

Certains produits pétroliers sont difficilement valorisables du fait de leur haute teneur en soufre. Ils peuvent néanmoins être traités par des procédés de conversion thermique, tels que le craquage catalytique, craquage thermique, hydrocraquage, viscoréduction, pyrolyse. Ce type de charge a tendance à contaminer et désactiver les catalyseurs, nécessitant un remplacement fréquent et coûteux des catalyseurs utilisé dans les procédés catalytiques. Des procédés dépourvus de catalyseurs ont ainsi été développés.

Notamment, le procédé HTL (« Heavy to light » - lourd vers léger) permet de traiter des charges lourdes par conversion thermique en utilisant un fluide caloporteur formé de particules minérales, la chaleur nécessaire à la conversion étant apportée par les particules minérales en circulation.

Le document US 5 792 340 décrit par exemple un procédé dans lequel une charge subit une conversion thermique rapide (par pyrolyse ou craquage) dans un réacteur par mélange et transfert de chaleur rapide avec un flux de particules solides inorganiques chaudes (du sable) injectées dans le réacteur. Les particules sont ensuite séparées des produits de conversion, chauffées (par exemple par combustion du coke déposé sur elles lors de la conversion thermique), puis réinjectées dans le réacteur.

Les documents US2004069682A1 ou US2004069686A1 décrivent un procédé de conversion thermique rapide (pyrolyse) d'une charge lourde en présence de particules inorganiques caloporteuses et d'un composé contenant du calcium. Les particules inorganiques caloporteuses (par exemple du sable) sont ensuite séparées des produits de la conversion et régénérées avant d'être renvoyées dans la zone de conversion thermique. La présence d'un composé à base de calcium permet notamment de réduire les émissions d'oxydes d'azote.

Certains procédés permettent de limiter la production de $CO_2$. Le document WO2014140175A1 décrit ainsi un procédé de craquage thermique dans lequel la chaleur nécessaire au craquage est apportée par des particules minérales et des gaz de combustion provenant d'un régénérateur. La charge (une charge lourde, très lourde ou un bitume) est convertie en gaz et en coke qui se dépose sur les particules minérales. Les particules minérales cokées sont entraînées avec les gaz provenant de la charge convertie et régénérées dans le régénérateur avant d'être renvoyées avec les gaz de combustion dans la zone de craquage thermique, tandis que les gaz convertis sont condensés, puis fractionnés.

La plupart des procédés laissent toutefois des résidus ultimes, tel que du coke, peu ou pas valorisables et émettent des fumées contenant du dioxyde de carbone ($CO_2$) en quantité substantielle.

Pour l'ensemble des filières industrielles, les gaz à effet de serre et notamment le $CO_2$ sont considérés comme des polluants dont il est nécessaire de contrôler et réduire les émissions.

Notamment, dans le domaine du raffinage, de nombreux procédés émettent en cours de fonctionnement des fumées contenant du $CO_2$, dont les procédés de conversion thermique précédemment mentionnés. Le plus souvent, le captage du $CO_2$ est réalisé par un traitement qui consiste à séparer le $CO_2$ des autres éléments constitutifs de ces fumées, par exemple par absorption chimique par un solvant liquide, généralement une amine. Après absorption dans une première colonne, le solvant circule dans une colonne de régénération où la modification des conditions de pression et de température (chauffage) permet de désorber le $CO_2$ et de «régénérer» le solvant. Ce réchauffement est généralement assuré par de la vapeur d'eau et constitue une étape coûteuse en énergie.

Le captage par absorption chimique est le procédé le plus utilisé notamment car il permet d'obtenir un bon compromis entre le taux de captage et la pureté du $CO_2$ récupéré. Il existe néanmoins d'autres techniques de séparation du $CO_2$, telles que l'utilisation de membranes, la distillation cryogénique et l'adsorption.

Le traitement des fumées peut toutefois s'avérer coûteux en énergie lorsqu'il s'agit de séparer le $CO_2$ de l'azote, comme par exemple dans les fumées des installations de combustion. On peut alors utiliser d'autres techniques de captage, plus précisément de séparation, du $CO_2$. L'oxycombustion est un procédé qui permet de produire de l'énergie tout en captant le $CO_2$ généré lors de la combustion. Il consiste à brûler le combustible avec de l'oxygène pur ou de l'air enrichi en oxygène. De ce fait, le gaz de combustion renfermera principalement du $CO_2$ et de l'eau qui peuvent être facilement séparés et récupérés. Ce procédé implique la recirculation des fumées de combustion et leur mélange en amont du foyer avec l'oxygène pour contrôler et limiter la température de combustion. L'étape la plus coûteuse sur le plan énergétique est la production de dioxygène en amont, elle-même génératrice de $CO_2$. Il existe des procédés alternatifs, tels que la «combustion en boucle chimique» ou CLC (« chemical looping combustion » en anglais), pour lesquels l'oxygène est fourni par voie chimique. Le procédé CLC permet également de produire de l'énergie tout en captant le $CO_2$.

Le procédé CLC consiste à décomposer la réaction de combustion en deux réactions successives. Une première réaction d'oxydation d'une masse active, avec de l'air ou un gaz jouant le rôle de comburant, permet d'oxyder la masse active. Une seconde réaction de réduction de la masse active ainsi oxydée à l'aide d'un gaz réducteur permet ensuite d'obtenir une masse active réutilisable ainsi qu'un mélange gazeux comprenant essentiellement du $CO_2$ (généralement plus de 90%vol., voire 98%vol.) et de l'eau, voire du gaz de synthèse contenant du dihydrogène et du monoxyde d'azote. Cette technique permet donc d'isoler le $CO_2$ ou le gaz de synthèse dans un mélange gazeux pratiquement dépourvu d'oxygène et d'azote, facilitant ainsi la séparation et la récupération du $CO_2$ ou du gaz de synthèse. La masse active, passant alternativement de sa forme oxydée à sa forme réduite et inversement, décrit un cycle d'oxydo-réduction. Ainsi, dans le réacteur de réduction, la masse active ($M_xO_y$), où M est un métal, est tout d'abord réduite à l'état $M_xO_{y-2n-m/2}$, par l'intermédiaire d'un hydrocarbure $C_nH_m$ (n, m, x et y étant des nombres entiers non nuls), qui est corrélativement oxydé en $CO_2$ et $H_2O$, selon la réaction (1), ou éventuellement en mélange $CO + H_2$ selon les proportions utilisées.

$$C_nH_m + MxOy \rightarrow n\ CO_2 + m/2\ H_2O + M_xO_{y-2n-m/2} \qquad (1)$$

Dans le réacteur d'oxydation, la masse active est restaurée à son état oxydé ($M_xO_y$) au contact de l'air selon la réaction (2), avant de retourner vers le premier réacteur.

$$M_xO_{y-2n-m/2} + (n+m/4)\ O_2 \rightarrow M_xO_y \qquad (2)$$

L'oxycombustion comme le procédé CLC permettent ainsi de produire de l'énergie, et non des flux hydrocarbonés, tout en captant le $CO_2$.

Le document US10125323 décrit un procédé de traitement dans lequel une charge lourde est soumise à une réaction de craquage dans un réacteur en présence d'oxydes métalliques afin de former des produits de craquage et du coke déposé sur les oxydes métalliques. Ces derniers sont ensuite envoyés dans un réacteur de réduction d'une boucle CLC dans laquelle le coke est gazéifié en présence de vapeur d'eau, produisant un gaz de synthèse et des oxydes métalliques à l'état réduit. Ces derniers sont en partie renvoyés au réacteur de craquage et en partie envoyés dans un réacteur d'oxydation de la boucle CLC pour y être réoxydés avant d'être renvoyés dans le réacteur de réduction. La mise en œuvre de ce procédé peut toutefois s'avérer problématique. En effet, si le coke n'est pas bien brulé, les oxydes métalliques seront difficiles à ré-oxyder ce qui limitera la combustion du coke au cycle suivant et génèrera à nouveau des difficultés pour oxyder les oxydes métalliques réduits.

US9707532 divulgue un procédé et une installation de conversion de charges hydrocarbonée.

Description de l'invention

Afin de pallier tout ou partie des inconvénients précités, il est proposé un procédé de conversion thermique d'une charge pétrolière en produits hydrocarbonés plus légers, ce procédé ne produisant pas ou peu de résidu hydrocarboné ultime, permettant un captage du $CO_2$ produit.

Définitions

Par « particules inertes », on entend des particules (solides) inertes chimiquement dans les conditions réactionnelles usuelles, autrement dit des particules qui ne sont pas susceptibles de subir des modifications chimiques ou de catalyser des réactions chimiques.

Par « charge hydrocarbonée » ou « flux hydrocarboné », on entend un mélange de composés hydrocarbonés, un composé hydrocarboné contenant du carbone et de l'hydrogène, et éventuellement des hétéroatomes tels que le soufre, l'azote, des métaux, ....

Par « lit non emporté », on entend un lit de particules dont le niveau est contrôlé afin de maintenir une hauteur de lit constante.

Par « fines de particules », on entend des particules dont le diamètre moyen a été réduit par abrasion, du fait du frottement des particules les unes contre les autres, autrement dit par attrition. De telles particules ont donc un diamètre moyen inférieur au diamètre moyen des particules avant attrition.

Par « diamètre moyen », on entend le diamètre d'une particule sphérique de même masse. Ce diamètre moyen peut être déterminé par toute technique appropriée, notamment par les techniques de diffraction optique (par exemple par diffraction laser).

Aval et amont font référence aux sens de circulation des fluides au sein des différentes zones de l'installation.

Résumé de l'invention

Un premier objet de l'invention concerne un procédé tel que défini dans les revendications.

Dans le procédé selon l'invention, deux flux distincts de particules sont ainsi en circulation : un premier flux de particules formé de particules inertes chaudes circule entre la zone de conversion thermique et la zone de réduction de la boucle chimique d'oxydo-réduction et un deuxième flux de particules formé de particules porteur d'oxygène circule entre la zone de réduction et la zone d'oxydation de la boucle chimique. Les particules inertes jouent ainsi le rôle de caloporteur. Notamment, à l'intérieur de la zone de réduction, les particules de solide porteur d'oxygène et les particules inertes circulent à contre courant, les particules de solide porteur d'oxygène circulant typiquement de bas en haut.

Lors de l'étape de conversion thermique, par exemple un craquage thermique, on produit ainsi un flux hydrocarboné contenant des produits plus légers que la charge hydrocarbonée lourde à traiter.

En outre, le coke, résidu ultime de la conversion thermique, est brûlé dans la zone de réduction de la boucle thermique. La combustion du coke permet ainsi de fournir l'énergie nécessaire à la conversion thermique de la charge lourde. De plus, le procédé de combustion du coke ne nécessite pas d'apport en dioxygène couteux mais utilise les particules de solide porteur d'oxygène.

Ainsi, le procédé selon l'invention dans son ensemble ne produit pas de résidu ultime et permet de produire un flux hydrocarboné d'intérêt tout en captant les gaz de combustion générés, tels que le $CO_2$, à moindre coût de fonctionnement.

Les particules de solide porteur d'oxygène à l'état réduit ou partiellement réduit forment un lit situé au dessus d'un lit formé par les particules inertes dans la zone de réduction. A cet effet, le procédé présente une ou plusieurs des caractéristiques suivantes :

- une granulométrie des particules de solide porteur d'oxygène suffisamment inférieure à celle des particules inertes, par exemple inférieure d'un facteur de 1 à 1000, 100 à 1000, 1 à 10 ou 1 à 2, ou d'un facteur compris dans un intervalle défini par deux quelconques de ces limites, notamment telle que les particules de solide porteur d'oxygène soient plus légères que les particules inertes,
- un choix approprié du diamètre moyen des particules, notamment telle que les particules de solide porteur d'oxygène soient plus légères que les particules inertes, par exemple un diamètre moyen de 50 $\mu$m à 2mm ou de 50 $\mu$m à 500 $\mu$m,
- un choix approprié de la masse volumique des particules de porteur d'oxygène et des particules inertes, notamment telle que les particules de solide porteur d'oxygène soient plus légères que les particules inertes, par exemple une masse volumique de 1500 à 6000km/m$^3$ ou de 1500 à 5000kg/m$^3$,
- un choix approprié des conditions hydrodynamiques de la zone de réduction, notamment d'une vitesse superficielle d'un gaz de fluidisation de la zone de réduction de 30 à 300% de la vitesse terminale de chute moyenne des particules inertes, de 50 à 100% ou de 75 à 125%.

Avantageusement, la combustion du coke dans la zone de réduction peut être totale, ce qui permet de produire un deuxième effluent gazeux concentré en $CO_2$, contenant notamment 90%vol ou plus de $CO_2$.

Avantageusement, on peut récupérer le deuxième effluent gazeux produit dans la zone de réduction et le séparer des particules de solide porteur d'oxygène à l'état réduit ou partiellement réduit.

Le deuxième effluent gazeux peut alors être refroidit dans au moins un échangeur de chaleur par échange de chaleur avec un fluide, par exemple de l'eau sous forme liquide. Optionnellement, on peut utiliser le fluide réchauffé pour générer de l'énergie thermique ou électrique. L'énergie des gaz de combustion peut ainsi être récupérée et valorisée.

Avantageusement, les particules inertes chaudes peuvent former un lit non emporté dans la zone de conversion thermique traversé par la charge lourde circulante, notamment de bas en haut. Ceci permet de réaliser un bon contact avec la charge chaude et de faciliter la récupération des particules inertes cokées qui n'ont pas besoin d'être séparées du premier effluent, lequel est par exemple récupéré au dessus du lit non emporté.

Avantageusement, le premier effluent gazeux provenant de la zone de conversion thermique peut être soumis, optionnellement directement, à un fractionnement dans une zone de fractionnement, optionnellement après séparation de fines de particules inertes cokées, notamment directement après cette séparation. Il est ainsi possible de séparer les différents constituants hydrocarbonés du premier effluent, pour une utilisation ultérieure directe ou après un traitement supplémentaire. Notamment, l'envoi du premier effluent gazeux directement à la zone de fractionnement (éventuellement directement après séparation des fines) permet de bénéficier de la chaleur du premier effluent sortant de la zone de conversion thermique pour réaliser le fractionnement, limitant ainsi l'énergie à apporter pour réaliser le fractionnement.

Notamment, la zone de fractionnement peut séparer le premier effluent gazeux au moins en une fraction gazeuse incondensable et une fraction liquide, de préférence en au moins une fraction gazeuse incondensable, une fraction gazeuse condensable et une fraction liquide.

Optionnellement, on peut envoyer une partie au moins de ladite fraction gazeuse incondensable à la zone de conversion thermique, notamment pour améliorer les conditions hydrodynamiques et donc les performances en termes de conversion de la charge lourde.

Avantageusement, les particules de solide porteur d'oxygène à l'état réduit ou partiellement réduit, provenant de la zone de réduction et séparées du deuxième effluent, peuvent être recyclées en partie dans la zone de réduction pour poursuivre la conversion du coke.

Avantageusement, on peut refroidir les particules inertes chaudes au moins partiellement débarrassées de coke avant leur renvoi dans la zone de conversion thermique dans au moins un échangeur de chaleur par échange de chaleur avec un fluide, par exemple de l'eau sous forme liquide. Ceci peut permettre de réguler la température des particules inertes chaudes renvoyées dans la zone de conversion thermique.

Avantageusement, le deuxième effluent gazeux, après séparation des particules de solide porteur d'oxygène à l'état réduit ou partiellement réduit, optionnellement après refroidissement, peut être soumis à au moins un traitement de purification, notamment pour éliminer des impuretés éventuellement présentes telles que poussières, oxydes d'azote (NOx), oxydes de soufre (SOx), monoxyde de carbone (CO). Le ou les traitements de purification peuvent être réalisés dans une ou plusieurs zones de purification.

Avantageusement, le gaz oxydant utilisé dans la zone d'oxydation de la boucle thermique est de l'air, de sorte qu'il n'est pas nécessaire de fournir au procédé du dioxygène coûteux dont la production génère du $CO_2$.

Avantageusement, le gaz oxydant réduit lors de la ré-oxydation des particules de solide porteur d'oxygène peut être séparé des particules de solide du porteur d'oxygène ré-oxydées, puis soumis à au moins un traitement de purification, notamment pour éliminer les impuretés éventuellement présentes telles que poussières, oxydes d'azote, oxydes de soufre, monoxyde de carbone. Le ou les traitements de purification peuvent être réalisés dans une ou plusieurs zones de purification, de préférence distinctes de celles éventuellement prévues pour le traitement du deuxième effluent gazeux.

La charge hydrocarbonée lourde traitée par le procédé selon l'invention peut-être choisie parmi les charges hydrocarbonées à haute teneur en soufre, les résidus atmosphériques, les résidus sous vide, seuls ou en mélange.

Le procédé selon l'invention est particulièrement adapté pour le traitement de produits pétroliers lourds, et notamment les résidus de distillation du pétrole, les effluents issus de procédés de conversion thermique, de procédés de craquage catalytique, de procédés d'hydrocraquage, de procédés d'hydroconversion profonde, de procédés d'hydrotraitement des résidus atmosphériques ou sous vide (ARDS ou VRDS) ou bien encore les fiouls issus de mélanges de produits lourds.

La charge hydrocarbonée lourde peut être un mélange de composés hydrocarbonés lourds de température d'ébullition supérieure ou égale à 350°C, noté 350°C+. Notamment, le procédé selon l'invention est adapté au traitement de charges hydrocarbonées lourdes à teneur élevée en soufre, à savoir présentant une teneur en soufre supérieure ou égale à 0,5%m(massique), 1%m, 1,5%m, 2% m, 3%m, ou plus.

L'invention n'est pas adaptée pour traiter des charges hydrocarbonées lourdes solides de type coke, charbon, catalyseur coké provenant d'un procédé de craquage catalytique en lit fluidisé (FCC).

L'invention concerne également une installation tel que défini dans les revendications.

L'installation peut comprendre une ou plusieurs des caractéristiques suivantes :

- un deuxième dispositif de séparation gaz-solide pour séparer un deuxième effluent gazeux des particules de solide porteur d'oxygène à l'état réduit ou partiellement réduit situé sur la conduite d'évacuation des particules de solide porteur d'oxygène à l'état réduit ou partiellement réduit de la zone de réduction,
- un troisième dispositif de séparation gaz-solide pour séparer le gaz oxydant réduit sortant de la zone d'oxydation des particules de solide porteur d'oxygène ré-oxydées situé sur la conduite d'évacuation des particules de solide porteur d'oxygène ré-oxydées de la zone d'oxydation
- une zone de fractionnement alimentée par le premier effluent gazeux provenant de la zone de conversion thermique, optionnellement en aval du premier dispositif de séparation gaz-solide, la zone de fractionnement étant optionnellement équipée d'une conduite de recycle d'une fraction gazeuse incondensable alimentant la zone de conversion thermique,
- une conduite de recycle des particules de solide porteur d'oxygène à l'état réduit ou partiellement réduit provenant du deuxième dispositif de séparation gaz-solide vers l'alimentation de la zone de réduction,
- un ou plusieurs échangeurs de chaleur choisis parmi un échangeur de chaleur pour refroidir le deuxième effluent gazeux provenant du deuxième dispositif de séparation gaz-solide et un échangeur de chaleur pour refroidir les particules inertes recyclées dans la zone de conversion thermique,
- au moins un système de purification pour purifier le deuxième effluent gazeux provenant du deuxième dispositif de séparation gaz-solide, optionnellement en aval dudit au moins un échangeur de chaleur,
- au moins un autre système de purification du gaz oxydant réduit provenant du troisième dispositif de séparation gaz-solide.

Description détaillée de l'invention

Conversion thermique de la charge hydrocarbonée lourde

La réaction de conversion thermique de la charge hydrocarbonée lourde se déroule dans la zone de conversion thermique, en absence de dioxygène et de catalyseur, dans laquelle la charge est mise en contact avec des particules inertes produisant un premier effluent gazeux qui peut être ensuite évacué et du coke qui se dépose sur les particules inertes.

Cette première étape est similaire à la conversion thermique réalisée dans le procédé HTL précédemment mentionné.

On notera que la réaction de conversion thermique peut être réalisée en présence de dihydrogène, ce qui peut permettre de stabiliser les produits de conversion et de désulfurer davantage la charge. On pourra alors récupérer le dihydrogène non consommé, par exemple par fractionnement du premier effluent gazeux.

Ces particules inertes peuvent par exemple être choisies parmi de la silice ou tout autre matériau caloporteur, de préférence de dureté équivalente à la silice afin d'éviter la formation de fines. On pourra par exemple utiliser des oxydes de magnésium, des oxydes d'aluminium, des oxydes de cuivre ou similaire.

A l'intérieur de la zone de conversion thermique, la charge à traiter circule, de préférence au travers d'un lit de particules inertes dont le niveau est contrôlé. Autrement dit, en fonctionnement normal, les particules inertes ne sont pas entraînées avec le premier effluent gazeux mais forment un lit non emporté.

La charge à traiter peut par exemple circuler de bas en haut, dans un ou plusieurs réacteurs de type riser. Elle est d'abord vaporisée avant d'être convertie en gaz quittant la zone réactionnelle par le haut et en coke déposé sur les particules inertes. Les particules inertes cokées quittent la zone de conversion thermique par soutirage, de préférence à proximité du haut du lit de particules inertes.

En variante, les particules inertes pourraient également circuler de la zone de conversion thermique à la zone de réduction de la boucle thermique et vice versa, en utilisant par exemple la technologie du lit fluidisé circulant. Dans ce cas, particules inertes cokées sont récupérées en sortie (par exemple en zone haute) de la zone de conversion thermique en mélange avec le premier effluent dont elles sont séparées par le premier dispositif de séparation gaz-solides avant d'être envoyées dans la zone de réduction.

Dans les conditions opératoires du procédé selon l'invention, à savoir à pression atmosphérique, à une température allant avantageusement de 450°C à 600°C, de préférence de 480°C à 550°C (bornes comprises).

De manière générale, le temps de contact entre la charge à traiter et les particules inertes chaudes dans la zone réactionnelle peut être de quelques secondes à plusieurs minutes, par exemple 5 secondes à 10 minutes.

De manière générale, le rapport particules inertes/charge à traiter à l'intérieur de la zone de conversion thermique pourra être déterminé par l'homme du métier en fonction des temps de séjour de la charge.

La conversion thermique produit du coke et des composés hydrocarbonés plus légers que ceux initialement contenus dans la charge hydrocarbonée lourde.

Le flux hydrocarboné gazeux produit par conversion thermique contient en général une fraction liquide formant un pétrole brut synthétique (aussi appelé « syncrude » ou « synthetic crude ») oléfinique et une fraction gazeuse valorisable contenant beaucoup d'oléfines.

Les performances de la conversion thermique peuvent être contrôlées de manière usuelle en surveillant le débit de la charge à traiter, la température des particules inertes entrant dans la zone réactionnelle, le rapport débit de charge à traiter/débit de particules inertes entrant dans la zone réactionnelle, les conditions hydrodynamiques. Les conditions hydrodynamiques peuvent notamment être améliorées via l'injection d'un ou plusieurs des fluides suivants : fraction gazeuse incondensable issue du fractionnement du premier effluent gazeux, vapeur d'eau, dihydrogène.

Lorsque la charge à traiter comprend des composés contenant des hétéroatomes (soufre, azote, métaux), ces derniers se déposent sur les particules inertes lors de la conversion thermique. Ainsi, malgré l'absence de catalyseur, le procédé permet de réduire les teneurs en azote, soufre et métaux de la charge convertie.

En sortie de la zone de conversion thermique, on récupère ainsi un premier effluent gazeux de composés hydrocarbonés, du coke et les particules inertes, le coke (et éventuellement l'azote, le soufre et/ou les métaux) s'étant déposé sur ces dernières. On récupère alors le premier effluent gazeux, notamment en haut de la zone réactionnelle, optionnellement après séparation de fines de particules inertes cokées dans un dispositif de séparation gaz-solide comprenant par exemple un ou plusieurs dispositifs de séparation cyclonique. Les particules inertes cokées sont de leur côté évacuées de la zone réactionnelle et envoyées, notamment directement, dans la zone de réduction de la boucle chimique pour y être en partie ou totalement débarrassées du coke, et optionnellement du soufre et/ou de l'azote éventuellement présents, avant d'être renvoyées dans la zone de conversion thermique pour un nouveau cycle.

Les particules inertes circulent ainsi en continu entre la zone de conversion thermique et la zone de réduction de la boucle chimique d'oxydo-réduction.

La réaction de conversion thermique étant endothermique, l'énergie nécessaire est fournie au moins en partie par la combustion exothermique de tout ou partie du coke produit dans la boucle chimique d'oxydo-réduction, via les particules inertes au moins partiellement décokées sortant de la zone de réduction de la boucle chimique et entrant dans la zone de conversion thermique.

Au cours des différents cycles, les particules inertes peuvent se désagréger par attrition. Elles peuvent également se charger de plus en plus en métaux, voire en coke imbrûlé. On peut alors prévoir d'en soustraire régulièrement une partie, par exemple avant leur introduction dans la zone de réduction de la boucle thermique, notamment en sortie de la zone de conversion thermique, et d'en rajouter de nouvelles, par exemple avant leur entrée dans la zone de conversion thermique. Il est également possible par ce moyen de contrôler la chaleur dégagée dans la zone de réduction ou apportée dans la zone de conversion thermique.

La température des particules inertes provenant de la zone de réduction de la boucle thermique et entrant dans la zone de conversion thermique peut également être régulée au moyen d'un ou plusieurs échangeurs de chaleur disposés sur la conduite transportant les particules inertes de la boucle chimique vers la zone de conversion thermique.

Réaction de combustion du coke en boucle chimique

L'installation de combustion en boucle chimique d'oxydo-réduction comprend une zone d'oxydation et une zone de réduction. Des particules de solide porteur d'oxygène circulent d'une zone réactionnelle à l'autre, en utilisant par exemple la technologie du lit fluidisé circulant utilisant un gaz de fluidisation. Les particules de solide porteur d'oxygène peuvent ainsi passer en continu d'une zone à l'autre.

Le solide porteur d'oxygène est oxydé par un gaz oxydant, généralement de l'air, dans une zone d'oxydation comprenant au moins un lit fluidisé à une température allant généralement de 700 à 1200°C, préférentiellement de 800 à 1000 ° C. Il est ensuite transféré dans une zone de réduction comprenant au moins un réacteur en lit fluidisé où il est mis en contact avec le combustible (ici le coke déposé sur les particules inertes, ce dernier pouvant contenir outre du carbone, de l'azote, du soufre, de l'hydrogène, des métaux) à une température allant généralement de 800 à 1200° C, préférentiellement de 900 à 1100° C. Le temps de contact varie typiquement entre 10 secondes et 10 minutes, de préférence de 1 à 5 minutes. Le solide porteur d'oxygène est ensuite à nouveau transféré dans la zone d'oxydation.

Le ratio entre la masse active en circulation et la quantité d'oxygène à transférer entre les deux zones réactionnelles peut avantageusement être de 20 à 100.

Des particules de solide porteur d'oxygène utilisables sont généralement composées d'un couple ou d'un ensemble de couples oxydo-réducteur choisis parmi $CuO/Cu$, $Cu_2O/Cu$, $NiO/Ni$, $Fe_2O_3/Fe_3O_4$, $FeO/Fe$, $Fe_3O_4/FeO$, $MnO_2/Mn_2O_3$, $Mn_2O_3/Mn_3O_4$, $Mn_3O_4/MnO$, $MnO/Mn$, $Co_3O_4/CoO$, $CoO/Co$, et souvent d'un liant apportant une stabilité physico-chimique.

De nombreux types de liants sont utilisables, tels que la zircone stabilisée par yttrium, également appelée zircone yttriée (YSZ), l'alumine, les spinelles d'aluminate métallique, le dioxyde de titane, la silice, la zircone, le kaolin ou encore un liant de type cérine-zircone. Le ratio massique couple oxydo-réducteur/liant se situe généralement autour de 60/40 afin d'obtenir des particules présentant une bonne résistance mécanique ainsi que des propriétés redox (vitesse d'oxydation, de réduction et capacité de transfert d'oxygène) suffisantes.

On peut également utiliser du minerai d'ilménite ($FeTiO_3$) ou encore des catalyseurs à base de silice et d'alumine usés imprégnés de sels métalliques préférentiellement à base de fer, de nickel, de cuivre, de cobalt ou de manganèse, tel que décrit dans FR2930733B1, ces catalyseurs proviennent des installations de craquage catalytique en lit fluidisé.

Le coke déposé sur les particules inertes est ainsi introduit dans la zone de réduction dans laquelle il est oxydé par le solide porteur d'oxygène lequel est dans un état oxydé lorsqu'il est introduit dans la zone de réduction. La capacité maximale d'oxygène réellement disponible peut varier considérablement selon la nature du solide porteur d'oxygène, et est généralement comprise de 0,1 à 15%masse, et souvent de 0,3 à 6%masse.

Dans la zone de réduction, la combustion du coke peut être partielle ou totale, de préférence totale afin de produire un deuxième effluent riche en $CO_2$, à savoir contenant 90%vol. ou plus de $CO_2$. Une combustion partielle avec production de dihydrogène est toutefois envisageable.

Dans le cas de la combustion totale, le flux de gaz en sortie du réacteur de réduction est composé essentiellement de $CO_2$ et de vapeur d'eau (à savoir contenant 90%vol. ou plus de $CO_2$ et vapeur d'eau), voire de $NO_2$ et $SO_2$, les métaux restant sur les particules inertes. Un flux de $CO_2$ prêt à être séquestré est ensuite obtenu par condensation de la vapeur d'eau.

Dans le cas de la combustion partielle, le ratio masse active/combustible peut être ajusté de manière à réaliser l'oxydation partielle du combustible, produisant un gaz de synthèse sous forme d'un mélange $CO + H_2$. Le procédé peut donc être utilisé pour la production de gaz de synthèse. En outre, le CO produit peut alors être converti en $CO_2$ via les technologies bien connues.

Dans le cas où le gaz de fluidisation utilisé est la vapeur d'eau ou un mélange de vapeur d'eau et d'autre(s) gaz, la réaction du gaz CO à l'eau (ou water gas shift en termes anglo-saxons, $CO + H_2O \rightarrow CO_2 + H_2$) peut également avoir lieu, aboutissant à la production d'un mélange $CO_2 + H_2$ en sortie de réacteur. Dans ce cas, le gaz de combustion peut être utilisé à des fins de production d'énergie compte tenu de son pouvoir calorifique. On peut également envisager d'utiliser ce gaz pour la production de dihydrogène, pour par exemple alimenter des unités d'hydrogénation, d'hydrotraitement en raffinage ou un réseau de distribution de dihydrogène (après réaction de water gaz shift).

En fonction de l'utilisation des gaz de combustion, la pression du procédé sera ajustée. Ainsi, pour effectuer une combustion totale, on aura intérêt à travailler à pression faible pour minimiser le coût énergétique de compression des gaz et maximiser ainsi le rendement énergétique de l'installation. Pour produire du gaz de synthèse par combustion partielle, on pourra avantageusement dans certains cas travailler en pression, afin d'éviter la compression du gaz de synthèse en amont du procédé de synthèse aval : le procédé Fischer Tropsch travaillant par exemple à des pressions comprises entre 20 et 40 bars, on pourra trouver un intérêt à produire le gaz à une pression plus élevée.

On notera que lorsque des métaux sont déposés sur les particules inertes lors de la conversion thermique, ces derniers restent sur les particules en sortie de la zone de réduction. Il peut alors être nécessaire de retirer de la circulation les particules inertes chargées en métaux et d'injecter de nouvelles particules inertes.

Au contraire, le soufre et l'azote sont respectivement transformés en oxydes de soufre et oxydes d'azote dans la zone de réduction et sont évacués avec le deuxième effluent.

La granulométrie des particules de solide porteur d'oxygène est choisie suffisamment plus faible que la granulométrie des particules inertes de sorte que les particules de solide porteur d'oxygène surnagent au-dessus des particules inertes dans le lit fluidisé de la zone de réduction. Autrement dit, deux lits distincts de particules se forment, le lit inférieur comprenant essentiellement (à savoir plus de 80% en masse) des particules inertes, le lit supérieur comprenant essentiellement des particules de solide porteur d'oxygène. Ceci permet de récupérer les particules de solide porteur d'oxygène en partie haute de la zone de réduction en mélange avec le deuxième effluent gazeux, et les particules inertes en partie basse de la zone de réduction. Ces dernières sont ensuite renvoyées à l'alimentation de la zone de conversion thermique.

Avantageusement, de manière générale, deux lits distincts de particules peuvent être obtenus en choisissant des particules de granulométrie différente, avec éventuellement des particules de solide porteur d'oxygène plus légères que des particules inertes (en absence de coke), et des conditions hydrodynamiques appropriées dans la zone de réduction. Des particules de solide porteur d'oxygène plus légères que des particules inertes (en absence de coke) peuvent être obtenues par un choix approprié de la granulométrie des particules en fonction de la masse volumique du matériau les constituant, il reste néanmoins préférable de prévoir une granulométrie des particules de solide porteur d'oxygène inférieure à la granulométrie des particules inertes. Typiquement, on pourra utiliser des particules de solide porteur d'oxygène et des particules inertes présentant une masse volumique de 500 à 6000kg/m$^3$, préférablement de 1500 à 5000kg/m$^3$ et un diamètre moyen de 50$\mu$m à 2mm, voire de 50$\mu$m à 500$\mu$m. En particulier, le diamètre moyen des particules de porteur d'oxygène pourra alors être inférieur au diamètre moyen des particules inertes d'un facteur de 1 à 1000, voire de 100 à 1000, de préférence de 1 à 10, le plus souvent de 1 à 2, ou d'un facteur compris dans un intervalle défini par deux quelconques de ces limites. La valeur 1 pourra être exclue de ces différents intervalles. L'homme du métier saura choisir les diamètres moyens et masses volumiques de ces particules dans ces gammes et des conditions hydrodynamiques appropriées afin d'obtenir deux lits distincts de particules : un lit de particules de solide porteur d'oxygène et, sous celui-ci, un lit de particules inertes.

Des conditions hydrodynamiques appropriées peuvent être obtenues par une vitesse superficielle du fluide gazeux circulant de bas en haut en fonction de la vitesse terminale de chute moyenne des particules inertes suffisante pour séparer les particules inertes lourdes des particules de solide porteur d'oxygène plus lègères. Ce fluide gazeux circulant de bas en haut est le gaz de fluidisation de la zone de réduction et peut être formé des gaz de combustion (autrement dit le deuxième effluent de la présente invention, injecté en bas de la zone de réduction via une conduite de reçyle), de vapeur d'eau ou d'un mélange des deux. La vitesse superficielle du fluide gazeux, notamment pour des particules dans gammes de diamètre moyen et de masse volumique précédemment mentionnées, pourra être fixée à une valeur allant de 30 à 300% de la vitesse terminale de chute moyenne des particules inertes, de préférence de 50 à 150%, davantage de préférence de 75 à 125%. L'homme du métier saura déterminer la vitesse superficielle du gaz de fluidisation de la zone de réduction en fonction du diamètre moyen et de la masse volumique des différentes particules et notamment de la différence de masse de ces particules et/ou de la différence de granulométrie. Chacune des gammes citées ci-dessus pour le diamètre moyen, la masse volumique, la différence de masse et la différence de diamètre moyen peut être combinée avec une ou plusieurs des autres gammes d'une ou plusieurs de ces caractéristiques.

La vitesse terminale de chute moyenne est obtenue à partir de la formule (3) suivante :

$$Vt = \left( \frac{4 d_p (\rho_s - \rho_g) g}{3 \rho_g C_D} \right)^{1/2} \qquad (3)$$

Où :

$d_p$ est le diamètre moyen des particules
$\rho_s$ est la masse volumique des particules (kg/m$^3$)

$\rho_g$ est la masse volumique du fluide gazeux (kg/m$^3$)
$C_D$ est le coefficient de traînée
g, accélération due à la force de pesanteur (m/sec$^2$).

Avantageusement, les particules de solide porteur d'oxygène provenant de la zone d'oxydation sont introduites dans la zone de réduction dans une partie basse de celle-ci en dessous de l'introduction des particules inertes. Autrement dit, les particules de solide porteur d'oxygène à l'état oxydé entrent dans la zone de réduction en amont de l'entrée des particules inertes cokées provenant de la zone de conversion thermique par rapport à leur direction de circulation. Ceci permet de favoriser le contact entre les deux types de particules et la réduction du coke, notamment par une circulation à un contre-courant des particules inertes cokées, qui circulent de haut en bas, et des particules de porteur d'oxygène, ces dernières circulant de bas en haut. Cette circulation à contre courant peut être favorisée par l'injection du gaz de fluidisation (vapeur d'eau et/ou gaz de combustion) circulant de bas en haut, cette injection étant avantageusement réalisée en dessous de l'introduction des particules de solide porteur d'oxygène.

En particulier, l'introduction des particules inertes cokées provenant de la zone de conversion thermique peut être de préférence réalisée en tête du lit inférieur.

Avantageusement, les particules inertes décokées (au moins en partie) peuvent être soutirées en fond de la zone de réduction pour être renvoyées dans la zone de conversion thermique.

Avantageusement, les particules de porteurs d'oxygène peuvent-être de taille micrométrique et les particules inertes peuvent être de taille millimétrique. La différence de taille entre les deux types de particules peut ainsi être de 100 à 1000, toutefois, on pourra choisir des particules dont le diamètre moyen diffère d'un facteur de 1 à 1000, de préférence de 1 à 10, le plus souvent de 1 à 2, ou d'un facteur compris dans un intervalle défini par deux quelconques des limites précitées. La valeur 1 pourra être exclue de ces différents intervalles. Une telle différente de taille favorise la séparation en deux lits, notamment quand les conditions hydrodynamiques sont remplies, à savoir notamment quand le gaz de fluidisation progresse de bas en haut.

Les particules de solide porteur d'oxygène réduites totalement ou en partie suite à l'oxydation du coke se retrouvent ainsi en partie haute de la zone de réduction dont elles sont évacuées.

Les particules de solide porteur d'oxygène sont en général évacuées en mélange avec le deuxième effluent gazeux. Elles peuvent alors être séparées de ce dernier dans un deuxième dispositif de séparation gaz solide, comprenant par exemple un, deux ou plusieurs dispositifs de séparation cyclonique, de préférence au moins trois.

Les particules de solide porteur de d'oxygène ainsi récupérées peuvent ensuite soit être envoyées en totalité à la zone d'oxydation, soit être envoyées en partie à la zone d'oxydation et le reste à l'entrée de la zone de réduction pour poursuivre la réduction du coke.

Le deuxième effluent gazeux contient essentiellement du dioxyde de carbone et de l'eau (à savoir 90%vol. ou plus de $CO_2$ et eau), notamment lorsque la combustion est totale. Il peut également contenir des poussières, des oxydes d'azote et des oxydes de soufre, lesquels pourront être éliminés par un traitement approprié dans un ou plusieurs systèmes de purification. A titre d'exemple, on pourra par exemple utiliser des systèmes de condensation pour récupérer l'eau et éventuellement les NOx ou SOx, des systèmes de réduction des Nox (appelés DeNox), des systèmes de réduction des SOx (DeSox), des systèmes de dépoussiérage (utilisation de filtres, électrofiltres,...), des systèmes de conversion du CO résiduel en $CO_2$. On pourra prévoir de récupérer la chaleur du deuxième effluent gazeux au moyen d'un ou plusieurs échangeurs de chaleur, de préférence situés en amont du ou des systèmes de purification. De tels traitements de purification permettent de séparer/récupérer le $CO_2$, autrement dit de le capter, en vue de son utilisation ultérieure, ces séparations/récupérations étant facilitées du fait des teneurs élevées du deuxième effluent en $CO_2$ produit lors d'une combustion totale.

Dans la zone d'oxydation, les particules de solide porteur d'oxygène sont ré-oxydées, au moins en partie, de préférence entièrement, par le gaz oxydant. Avantageusement, elles sont introduites en partie basse de la zone d'oxydation de même que le gaz oxydant, le plus souvent de l'air. Elles sont ensuite récupérées en partie haute de la zone d'oxydation, par exemple en mélange avec l'air appauvri en dioxygène dont elles peuvent alors être séparées dans un troisième dispositif de séparation gaz-solide, tel que par exemple un ou plusieurs dispositifs de séparation cyclonique. L'air appauvri en dioxygène peut ensuite être purifié pour éliminer les éventuelles impuretés de type poussières. Les particules de solide porteur d'oxygène ré-oxydées récupérées sont alors réinjectées dans la zone de réduction, de préférence en partie basse de celle-ci, sous l'introduction des particules inertes. Eventuellement, une partie des particules de solide porteur d'oxygène ré-oxydées peut être réinjectée dans la zone d'oxydation afin de poursuivre leur oxydation.

Au cours des différents cycles, les particules de solide porteur d'oxygène peuvent se désagréger par attrition : on peut alors prévoir d'en soustraire régulièrement une partie, par exemple après leur sortie de la zone d'oxydation, notamment après leur séparation de l'air, et d'en rajouter de nouvelles, par exemple à l'entrée de la zone d'oxydation ou en amont de cette entrée.

Fractionnement du premier effluent gazeux

Le premier effluent gazeux sortant de la zone de conversion thermique, après séparation éventuelle des fines de particules inertes cokées, peut être utilisé directement ou être traité.

Dans un mode de réalisation préféré, le premier effluent gazeux, après séparation des particules inertes cokées, peut être avantageusement envoyé dans une zone de fractionnement afin de récupérer et de séparer plusieurs fractions de composés hydrocarbonés.

Cette zone de fractionnement peut comprendre une ou plusieurs colonnes de distillation choisies parmi une colonne de distillation sous pression atmosphérique et une colonne de distillation sous vide, de préférence une colonne de distillation sous pression atmosphérique.

Le fractionnement peut avantageusement permettre de séparer au moins une fraction gazeuse incondensable et une fraction liquide.

Dans un mode de réalisation, le fractionnement peut permettre de séparer au moins une fraction gazeuse incondensable, une fraction gazeuse condensable et une fraction liquide.

La fraction gazeuse incondensable peut comprendre des gaz tels que méthane, éthane, propane, butane, sulfure de dihydrogène, des oléfines (éthylène, propylène, butène,...), etc, principalement méthane, éthane, propane et sulfure de dihydrogène. Ces gaz peuvent avantageusement être en partie envoyés dans la zone de conversion pour améliorer les conditions hydrodynamiques.

La fraction gazeuse condensable peut comprendre des hydrocarbures qui comportent au moins 5 atomes de carbone, par exemple de 5 à 35 atomes de carbone). Elle peut être mélangée à la fraction liquide.

Une partie de la fraction gazeuse condensable, notamment la partie la plus lourde peut être recyclée en charge de la conversion thermique pour produire plus de gaz et de distillats moyens.

La fraction liquide peut former un syncrude, qui pourra être envoyé vers des traitements de raffinage classiques si nécessaire. Cette fraction liquide peut également être fractionnée en plusieurs coupes (naphta, distillat moyen, résidu atmosphérique).

Ces différentes fractions peuvent ensuite être éventuellement soumises à des traitements ultérieurs classiques de raffinage ou de synthèse selon l'utilisation souhaitée.

Description des figures

L'invention est maintenant décrite en référence aux dessins annexés, non limitatifs, dans lesquels :

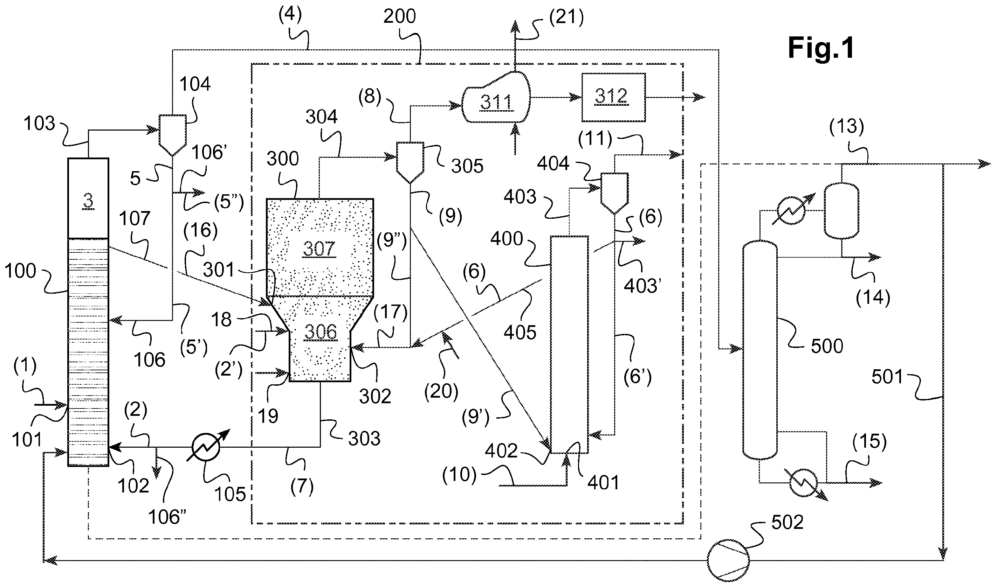

La figure 1 représente un exemple de réalisation d'une installation mettant en œuvre le procédé selon l'invention.

Sur la figure, les références se rapportant à des fluides en circulation sont entre parenthèses.

Dans un premier temps, la charge hydrocarbonée lourde **1,** par exemple un produit pétrolier à haute teneur en soufre, est soumise à une conversion thermique dans une zone réactionnelle **100,** ici un réacteur en lit fluidisé non emporté, en présence de particules inertes chaudes **2.** A cet effet, la zone réactionnelle **100** comprend une alimentation **101** en charge hydrocarbonée lourde **1** et une alimentation **102** en particules inertes chaudes **2.** La charge hydrocarbonée lourde **1** et les particules inertes chaudes **2** sont introduites en partie basse de la zone réactionnelle **100.** Les particules inertes chaudes **2** forment un lit **3** non emporté de hauteur constante. L'alimentation **101** en charge hydrocarbonée lourde **1** est ici située au-dessus de l'alimentation **102** en particules inertes chaudes **2.** Au contact des particules inertes chaudes **2** à haute température, la charge hydrocarbonée lourde **1** subit une conversion thermique, générant un effluent gazeux **4** (appelé premier effluent gazeux dans la suite) progressant verticalement vers le haut dans la zone réactionnelle **100** et du coke se déposant sur les particules inertes chaudes **2.** Généralement, la charge hydrocarbonée lourde **1** est introduite à l'intérieur de la zone réactionnelle **100** via des injecteurs la pulvérisant.

La zone réactionnelle **100** comprend également une conduite d'évacuation **103** du premier effluent gazeux **4** essentiellement constitué de composés hydrocarbonés le plus souvent mélangés à des fines de particules inertes cokées **5.** La conduite d'évacuation **103,** située en partie haute de la zone réactionnelle **100,** est équipée d'un premier dispositif de séparation gaz-solide **104** pour séparer le premier effluent gazeux **4** des fines de particules inertes cokées **5.** A titre d'exemple, le premier dispositif de séparation gaz-solide **104** peut comprendre deux cyclones.

Les fines de particules inertes cokées **5** sont évacuées du système **(5")** par la conduite **105,** mais une partie peut être recyclée **(5')** vers la zone réactionnelle **100** via une conduite **106** débouchant au sein du lit **3** de particules inertes. Les particules inertes cokées **16** sont évacuées de la zone réactionnelle **100** via la conduite **107.** La conduite **107** soutire ici les particules inertes cokées **16** depuis une partie supérieure, notamment depuis le sommet, du lit **3** de particules inertes à l'intérieur de la zone réactionnelle **100.** Le coke déposé à la surface des particules inertes cokées **16** est ensuite brûlé dans une boucle chimique **200** laquelle comprend une zone de réduction **300** et une zone d'oxydation **400.**

La zone de réduction **300,** ici un réacteur à lit fluidisé, comprend une alimentation **301** en particules inertes cokées **16** provenant de la zone réactionnelle **100,** une alimentation **302** en particules de solide porteur d'oxygène à l'état oxydé **17** provenant en partie de la zone d'oxydation **400** et d'un séparateur gaz-solide **305,** une conduite d'évacuation **303**

des particules inertes au moins partiellement débarrassées de coke **7,** qui forment une partie au moins des particules inertes chaudes **2** entrant dans la zone de conversion thermique **100.**

La zone de réduction **300** comprend aussi une conduite d'évacuation **304** de particules de solide porteur d'oxygène à l'état réduit ou partiellement réduit mélangées à un deuxième effluent gazeux **8**, riche en $CO_2$ et en $H_2O$ lorsque la combustion est totale. Cette conduite d'évacuation **304** est équipée d'un deuxième dispositif de séparation gaz-solide **305** pour séparer le deuxième effluent gazeux **8** des particules de solide porteur d'oxygène à l'état réduit ou partiellement réduit **9.**

L'alimentation **302** en particules de solide porteur d'oxygène à l'état oxydé **17** est située en partie inférieure de la zone de réduction **300,** sous l'alimentation **301** en particules inertes cokées **16.** Cela favorise un contre-courant des particules inertes cokées **16** et des particules de porteur d'oxygène à l'état oxydé **17** pour réaliser la combustion du coke. Un gaz de fluidisation, ici de la vapeur d'eau est injecté via une alimentation **19** prévue sous les alimentations **301** et **302.** La différence de granulométrie entre ces particules, le gaz généré par la combustion du coke et/ou l'injection de vapeur d'eau via l'alimentation **19** permettent ce mouvement à contre courant et la formation de deux lits de particules :

- un lit inférieur **306** composé essentiellement de particules inertes traversé par les particules de solide porteur d'oxygène à l'état oxydé **17** transférant leur oxygène pour la combustion du coke.

- un lit supérieur **307** composé essentiellement de particules de solide porteur d'oxygène à l'état réduit ou partiellement réduit **9.**

Une alimentation **18** de la zone de réduction **300** (située ici sous l'alimentation **301** en particules inertes cokées et au dessus de l'alimentation **302** en particules de solide porteur d'oxygène à l'état oxydé **17**) permet de faire l'appoint en particules inertes **2'** (perte par attrition soutirée en **106'** ou soustraction de l'installation via la conduite **106''**). L'invention n'est toutefois pas limitée à cette position de l'alimentation en particules inertes fraiches **2',** ni à ces positions des extractions de particules inertes usées/dégradées.

La conduite d'évacuation **303** des particules inertes en majeure partie décokées **7** renvoie ces dernières à l'alimentation **102** de la zone de conversion thermique **100.** Cette conduite d'évacuation **303** est ici située en fond de la zone de réduction **300.** Un échangeur de chaleur **105** permet de contrôler la température à laquelle les particules inertes rejoignent la zone de conversion thermique **100.**

La zone d'oxydation **400,** ici un réacteur à lit fluidisé, comprend une alimentation **401** en gaz oxydant **10,** une alimentation **402** en particules de solide porteur d'oxygène à l'état réduit ou partiellement réduit **9'** provenant du deuxième dispositif de séparation **305** et une conduite d'évacuation **403** des particules de solide porteur d'oxygène à l'état oxydé ou partiellement oxydé **6.**

Dans l'exemple, cette conduite d'évacuation **403** est équipée d'un troisième dispositif de séparation gaz solide **404** pour la séparation des particules de solide porteur d'oxygène à l'état oxydé ou partiellement oxydé **6** et du gaz oxydant dont la teneur en oxygène est abaissée **11.** Le flux de particules de solide porteur d'oxygène à l'état oxydé ou partiellement oxydé **6** est renvoyé en partie ou en totalité, en mélange avec une partie des particules de solides porteur d'oxygène réduit ou partiellement réduit **9'',** vers la zone de réduction **300** via une conduite **405** connectée à l'alimentation **302.** Une partie **6'** des particules de solide porteur d'oxygène à l'état oxydé **6** peut aussi être renvoyée en entrée de la zone d'oxydation afin de poursuivre leur oxydation. Afin de conserver la capacité des particules de solide porteur d'oxygène à transférer de l'oxygène, une partie des particules à l'équilibre peut être soustraite au système (via la conduite **403'**) et un appoint en particules fraîches **(20)** peut être réalisé, par exemple en amont de la zone de réduction **300.**

Le gaz oxydant étant en général de l'air, le gaz oxydant dont la teneur en oxygène est abaissée **11** est alors de l'air enrichi en diazote. Ce flux d'air enrichi en diazote **11** peut éventuellement être envoyé à un traitement ultérieur de purification.

L'installation représentée comprend en outre une zone de fractionnement **500** alimentée par le premier effluent gazeux **4** de la zone de conversion thermique **100.** La zone de fractionnement **500** est ici une colonne de distillation sous pression atmosphérique.

En sortie de la zone de fractionnement, on récupère une fraction gazeuse incondensable **13,** une fraction gazeuse condensable **14** et une fraction liquide **15.** La colonne de distillation peut éventuellement être équipée de soutirages additionnels pour produire des coupes distillats moyens et un résidu (ou fond de distillation). La teneur en soufre des différentes fractions liquide sera notablement plus basse que celle de la charge **1.** Dépendamment de la teneur en Soufre de la charge de départ, certaines coupes pourront être valorisées en tant que combustible marin à teneur en soufre inférieure à 0,5%m. A minima, la colonne de distillation produira une fraction en gaz incondensable **13** et une fraction liquide (syncrude) par mélange des fractions **14** et **15.** La fraction gazeuse incondensable **13** pourra être en partie recyclée vers la zone réactionnelle **100** pour améliorer les conditions hydrodynamiques et donc les performances en termes de conversion de la charge lourde **1.** A cet effet, un compresseur **502** pourra être prévu sur la conduite **501** recyclant une partie de la fraction gazeuse incondensable **13** vers la zone réactionnelle **100.**

L'installation représentée comprend ici un échangeur de chaleur **311** utilisé pour refroidir le deuxième effluent gazeux **8** et produire côté utilité de la vapeur d'eau **21** qui pourra être valorisée soit en tant que fluide caloporteur, soit pour générer de l'électricité via une turbine. L'installation représentée comprend enfin un système de purification **312** pour condenser l'eau et soustraire les SOx et les NOx, voire dépoussiérer le flux et/ou convertir du CO éventuellement produit (en cas de combustion non totale du coke) en $CO_2$, produisant ainsi un flux de $CO_2$ concentré pouvant être transporté et utilisé ou stocké.

**Revendications**

1.  Procédé de conversion d'une charge hydrocarbonée lourde en un flux hydrocarboné plus léger et en coke par conversion thermique et conversion du coke par combustion dans une boucle chimique d'oxydo-réduction dans lequel :

    - on réalise une conversion thermique de la charge hydrocarbonée lourde dans une zone de conversion thermique par mise en contact avec des particules inertes chaudes pour produire, en absence de dioxygène et de catalyseur, optionnellement en présence de vapeur d'eau et/ou de dihydrogène, un premier effluent gazeux de composés hydrocarbonés et du coke, ce dernier étant déposé sur les particules inertes,
    - on évacue de la zone de conversion thermique les particules inertes cokées et on les envoie dans une zone de réduction d'une boucle chimique d'oxydo-réduction dans laquelle circulent des particules d'un solide porteur d'oxygène,
    - on réalise dans la zone de réduction une combustion du coke déposé sur les particules inertes cokées évacuées pour produire un deuxième effluent gazeux, des particules inertes chaudes au moins partiellement débarrassées de coke et des particules de solide porteur d'oxygène à l'état réduit ou partiellement réduit, les particules de solide porteur d'oxygène présentant une granulométrie suffisamment inférieure à celle des particules inertes et/ou un diamètre moyen et/ou une masse volumique telles qu'elles sont plus légères que les particules inertes et que les particules de solide porteur d'oxygène à l'état réduit ou partiellement réduit forment un lit situé au dessus d'un lit formé par les particules inertes dans la zone de réduction,
    - on évacue les particules de solide porteur d'oxygène à l'état réduit ou partiellement réduit de la zone de réduction et on les renvoie au moins en partie dans une zone d'oxydation de la boucle chimique pour les oxyder au moyen d'un gaz oxydant avant de les réintroduire dans la zone de réduction,
    - on évacue de la zone de réduction les particules inertes chaudes au moins partiellement débarrassées de coke et on les renvoie au moins en partie dans la zone de conversion thermique, l'énergie nécessaire à la réaction de conversion thermique étant fournie au moins en partie par la combustion exothermique de tout ou partie du coke dans la zone de réduction.

2.  Procédé selon la revendication 1, dans lequel on récupère le deuxième effluent gazeux produit dans la zone de réduction et on le sépare des particules de solide porteur d'oxygène à l'état réduit ou partiellement réduit.

3.  Procédé selon la revendication 2, dans lequel le deuxième effluent gazeux, produit dans la zone de réduction et séparé des particules de solide porteur d'oxygène à l'état réduit ou partiellement réduit, est refroidit dans au moins un échangeur de chaleur par échange de chaleur avec un fluide, par exemple de l'eau sous forme liquide, et, optionnellement, on utilise le fluide réchauffé pour générer de l'énergie thermique ou électrique.

4.  Procédé selon l'une quelconque des revendications 1 à 3, dans lequel les particules inertes chaudes forment un lit non emporté dans la zone de conversion thermique traversé par la charge lourde circulante.

5.  Procédé selon l'une quelconque des revendications 1 à 4, dans lequel le premier effluent gazeux provenant de la zone de conversion thermique est soumis, optionnellement directement, à un fractionnement dans une zone de fractionnement, optionnellement après séparation de fines de particules inertes cokées.

6.  Procédé selon la revendication 5, dans lequel la zone de fractionnement sépare le premier effluent gazeux au moins en une fraction gazeuse incondensable et une fraction liquide, et, optionnellement, une partie au moins de ladite fraction gazeuse incondensable est renvoyée à la zone de conversion thermique.

7.  Procédé selon l'une quelconque des revendications 1 à 6, dans lequel les particules de solide porteur d'oxygène à l'état réduit ou partiellement réduit provenant de la zone de réduction et séparées du deuxième effluent, sont recyclées en partie dans la zone de réduction.

8. Procédé selon l'une quelconque des revendications 1 à 7, dans lequel on refroidit les particules inertes chaudes au moins partiellement débarrassées de coke avant leur renvoi dans la zone de conversion thermique dans un échangeur de chaleur par échange de chaleur avec un fluide, par exemple de l'eau sous forme liquide.

9. Procédé selon l'une quelconque des revendications 1 à 8, dans lequel on soumet à un traitement de purification au moins un fluide choisi parmi :

   - le deuxième effluent gazeux après séparation des particules de solide porteur d'oxygène à l'état réduit ou partiellement réduit et optionnellement après refroidissement,
   - le gaz oxydant réduit lors de la ré-oxydation des particules de solide porteur d'oxygène après séparation des particules de solide porteur d'oxygène ré-oxydées.

10. Procédé selon l'une quelconque des revendications 1 à 9, dans lequel la charge hydrocarbonée lourde est choisie parmi les charges hydrocarbonées à haute teneur en soufre, les résidus atmosphériques, les résidus sous vide, seuls ou en mélange.

11. Procédé selon l'une quelconque des revendications 1 à 10, comprenant une ou plusieurs des caractéristiques suivantes :

   - une granulométrie des particules de solide porteur d'oxygène suffisamment inférieure à celle des particules inertes, optionnellement inférieure d'un facteur de 1 à 1000,
   - un diamètre moyen des particules de solide porteur d'oxygène et des particules inertes de 50 $\mu$m à 2mm,
   - une masse volumique des particules de solide porteur d'oxygène et des particules inertes de 500 à 6000kg/m$^3$,
   - une vitesse superficielle d'un gaz de fluidisation de la zone de réduction de 30 à 300% de la vitesse terminale de chute moyenne des particules inertes.

12. Installation de conversion d'une charge hydrocarbonée lourde pour la mise en œuvre du procédé selon l'une quelconque des revendications 1 à 11, comprenant au moins :

   - une zone réactionnelle (100) de conversion thermique, dépourvue d'alimentation en dioxygène et catalyseur, optionnellement équipée d'une alimentation en vapeur d'eau et/ou dihydrogène, comprenant une alimentation (101) en charge hydrocarbonée lourde, une alimentation (102) en particules inertes chaudes, une première conduite d'évacuation (103) d'un premier effluent gazeux comprenant des composés hydrocarbonés et une deuxième conduite d'évacuation (107) de particules inertes cokées, la première conduite d'évacuation (103) étant optionnellement équipée d'un premier dispositif de séparation gaz-solide (104) pour séparer le premier effluent gazeux des fines de particules inertes cokées,
   - une boucle chimique d'oxydo-réduction (200) comprenant une zone de réduction (300) et une zone d'oxydation (400) dans laquelle circulent des particules d'un solide porteur d'oxygène, la zone de réduction (300) comprenant au moins un lit fluidisé, une alimentation (301) en particules inertes cokées chaudes connectée à la deuxième conduite d'évacuation (107) de particules inertes cokées de la zone de conversion thermique (100), une alimentation (302) en particules de solide porteur d'oxygène provenant de la zone d'oxydation (400), une conduite d'évacuation (303) des particules inertes au moins partiellement débarrassées de coke connectée à l'alimentation (102) en particules inertes chaudes de la zone de conversion thermique, une conduite d'évacuation (304) des particules de solide porteur d'oxygène à l'état réduit ou partiellement réduit, une alimentation (302) en particules de solide porteur d'oxygène étant située en partie inférieure de la zone de réduction (300), sous l'alimentation (301) en particules inertes cokées, et la zone d'oxydation (400) comprenant au moins un lit fluidisé, une alimentation (401) en gaz oxydant, une alimentation (402) en particules de solide porteur d'oxygène à l'état réduit ou partiellement réduit connectée à la conduite d'évacuation de la zone de réduction et une conduite d'évacuation (403) des particules de solide porteur d'oxygène ré-oxydées connectée à l'alimentation (302) en particules de solide porteur d'oxygène de la zone de réduction.

13. Installation selon la revendication 12, comprenant au moins une des caractéristiques suivantes :

   - un deuxième dispositif de séparation gaz-solide pour séparer un deuxième effluent gazeux des particules de solide porteur d'oxygène à l'état réduit ou partiellement réduit situé sur la conduite d'évacuation des particules de solide porteur d'oxygène à l'état réduit ou partiellement réduit de la zone de réduction,
   - un troisième dispositif de séparation gaz-solide pour séparer le gaz oxydant réduit sortant de la zone d'oxydation des particules de solide porteur d'oxygène ré-oxydées situé sur la conduite d'évacuation (403) des particules de solide porteur d'oxygène ré-oxydées de la zone d'oxydation.

14. Installation selon la revendication 13, comprenant une conduite de recycle des particules de solide porteur d'oxygène à l'état réduit ou partiellement réduit provenant du deuxième dispositif de séparation gaz-solide vers l'alimentation de la zone de réduction.

15. Installation selon l'une quelconque des revendications 12 à 14, comprenant un ou plusieurs échangeurs de chaleur choisis parmi un échangeur de chaleur (311) pour refroidir le deuxième effluent gazeux provenant du deuxième dispositif de séparation gaz-solide et un échangeur de chaleur (105) pour refroidir les particules inertes recyclées dans la zone de conversion thermique.

16. Installation selon l'une quelconque des revendications 13 ou 14 ou 15 lorsqu'elle dépend des revendications 13 ou 14, comprenant au moins une des caractéristiques suivantes :

- au moins un système de purification (312) pour purifier le deuxième effluent gazeux provenant du deuxième dispositif de séparation gaz-solide, optionnellement en aval dudit au moins un échangeur de chaleur,
- au moins un autre système de purification du gaz oxydant réduit provenant du troisième dispositif de séparation gaz-solide.

17. Installation selon l'une quelconque des revendications 12 à 16, comprenant en outre une zone de fractionnement (500) alimentée par la première conduite d'évacuation (103) du premier effluent gazeux de la zone de conversion thermique, optionnellement en aval du premier dispositif de séparation gaz-solide, la zone de fractionnement étant optionnellement équipée d'une conduite de recycle (501) d'une fraction gazeuse incondensable alimentant la zone de conversion thermique.

**Patentansprüche**

1. Verfahren zur Umwandlung einer schweren Kohlenwasserstoffmenge in einen leichteren Kohlenwasserstoffstrom und in Koks durch thermische Umwandlung und Umwandlung des Kokses durch Verbrennung in einem Redox-basierenden Chemical-Looping, wobei:

- eine thermische Umwandlung der schweren Kohlenwasserstoffmenge in einer thermischen Umwandlungszone durch Kontakt mit heißen inerten Partikeln durchgeführt wird, um in Abwesenheit von Disauerstoff und Katalysator, optional in Anwesenheit von Wasserdampf und/oder Dihydrogen, ein erstes gasförmiges Abgas aus Kohlenwasserstoffverbindungen und Koks zu erzeugen, wobei letzteres auf den inerten Partikeln abgelagert wird,
- die verkokten inerten Partikel aus der thermischen Umwandlungszone abgeführt und in eine Reduktionszone einer Redox-basierenden Chemical-Looping geleitet werden, in der Partikel eines sauerstofftragenden Feststoffs zirkulieren,
- in der Reduktionszone eine Verbrennung des auf den abgeführten verkokten inerten Partikeln abgelagerten Kokses durchgeführt wird, um ein zweites gasförmiges Abgas, heiße inerte Partikel, die mindestens teilweise von Koks befreit sind, und Partikel eines sauerstofftragenden Feststoffs im reduzierten oder teilweise reduzierten Zustand zu erzeugen, wobei die sauerstofftragenden Feststoffpartikel eine in ausreichender Weise kleinere Körnung als die der inerten Partikel aufweisen und/oder einen mittleren Durchmesser und/oder eine Dichte, so dass sie leichter als die inerten Partikel sind, und die sauerstofftragenden Feststoffpartikel im reduzierten oder teilweise reduzierten Zustand eine Schicht bilden, die sich über einer Schicht befindet, die von den inerten Partikeln in der Reduktionszone gebildet wird,
- die sauerstofftragenden Feststoffpartikel im reduzierten oder teilweise reduzierten Zustand aus der Reduktionszone abgeführt und mindestens teilweise in eine Oxidationszone des Chemical-Looping zurückgeführt werden, um sie mittels eines oxidierenden Gases zu oxidieren, bevor sie wieder in die Reduktionszone eingeführt werden,
- die mindestens teilweise von Koks befreiten heißen inerten Partikel aus der Reduktionszone abgeführt und mindestens teilweise in die thermische Umwandlungszone zurückgeführt werden, wobei die für die Wärmewandlungsreaktion erforderliche Energie mindestens teilweise durch die exotherme Verbrennung des gesamten oder eines Teils des Koks in der Reduktionszone bereitgestellt wird.

2. Verfahren nach Anspruch 1, wobei das in der Reduktionszone erzeugte zweite gasförmige Abgas zurückgewonnen und von den sauerstofftragenden Feststoffpartikeln im reduzierten oder teilweise reduzierten Zustand getrennt wird.

**3.** Verfahren nach Anspruch 2, wobei das zweite gasförmige Abgas, das in der Reduktionszone erzeugt und von den sauerstofftragenden Feststoffpartikeln im reduzierten oder teilweise reduzierten Zustand getrennt wird, in mindestens einem Wärmetauscher durch Wärmeaustausch mit einem Fluid gekühlt wird, z. B. Wasser in flüssiger Form, und optional das erwärmte Fluid zur Erzeugung von thermischer oder elektrischer Energie verwendet wird.

**4.** Verfahren nach einem der Ansprüche 1 bis 3, wobei die heißen inerten Partikel eine nicht mitgenommene Schicht in der thermischen Umwandlungszone bilden, die von der zirkulierenden schweren Menge durchquert wird.

**5.** Verfahren nach einem der Ansprüche 1 bis 4, wobei das erste aus der thermischen Umwandlungszone kommende gasförmige Abgas, optional direkt, einer Fraktionierung in einer Fraktionierungszone unterzogen wird, optional nach Abtrennung der feinen verkoksten inerten Partikel.

**6.** Verfahren nach Anspruch 5, wobei die Fraktionierungszone das erste gasförmige Abgas mindestens in eine nicht kondensierbare gasförmige Fraktion und eine flüssige Fraktion trennt, und wobei optional mindestens ein Teil der nicht kondensierbaren gasförmige Fraktion in die thermische Umwandlungszone zurückgeführt wird.

**7.** Verfahren nach einem der Ansprüche 1 bis 6, wobei die sauerstofftragenden Feststoffpartikel im reduzierten oder teilweise reduzierten Zustand, die aus der Reduktionszone stammen und vom zweiten Abgas getrennt sind, teilweise in der Reduktionszone recycelt werden.

**8.** Verfahren nach einem der Ansprüche 1 bis 7, wobei die mindestens teilweise von Koks befreiten heißen inerten Partikel vor ihrer Rückführung in die thermische Umwandlungszone in einem Wärmetauscher durch Wärmeaustausch mit einem Fluid, z. B. Wasser in flüssiger Form, abgekühlt werden.

**9.** Verfahren nach einem der Ansprüche 1 bis 8, wobei mindestens ein Fluid einem Reinigungsprozess unterzogen wird, das ausgewählt wird aus:

- dem zweiten gasförmigen Abgas nach Abtrennung der sauerstofftragenden Feststoffpartikel im reduzierten oder teilweise reduzierten Zustand und optional nach der Abkühlung,
- dem oxidierenden Gas, das bei der Reoxidation der sauerstofftragenden Feststoffpartikel nach der Abtrennung der reoxidierten sauerstofftragenden Feststoffpartikel reduziert wurde.

**10.** Verfahren nach einem der Ansprüche 1 bis 9, wobei die schwere Kohlenwasserstoffmenge ausgewählt ist aus hochschwefeligen Kohlenwasserstoffmengen, atmosphärischen Rückständen und Vakuumrückständen, allein oder gemischt.

**11.** Verfahren nach einem der Ansprüche 1 bis 10, eines oder mehrere der folgenden Merkmale umfassend:

- eine Körnung der Partikel des sauerstofftragenden Feststoffs, die in ausreichender Weise kleiner ist als die der inerten Partikel, optional um einen Faktor von 1 bis 1000 kleiner,
- einen mittleren Durchmesser der sauerstofftragenden Feststoffpartikel und der inerten Partikel von 50 $\mu$m bis 2 mm,
- eine Dichte der sauerstofftragenden Feststoffpartikel und der inerten Partikel von 500 bis 6000 kg/m$^3$,
- eine Oberflächengeschwindigkeit eines Fluidisierungsgases der Reduktionszone von 30 bis 300 % der durchschnittlichen Endfallgeschwindigkeit der inerten Partikel.

**12.** Anlage zur Umwandlung einer schweren Kohlenwasserstoffmenge zur Durchführung des Verfahrens nach einem der Ansprüche 1 bis 11, mindestens umfassend:

- eine Reaktionszone (100) zur thermischen Umwandlung, ohne Versorgung mit Disauerstoff und Katalysator, optional ausgestattet mit einer Wasserdampf- und/oder Dihydrogen-Versorgung, eine Versorgung (101) mit schwerer Kohlenwasserstoffmenge umfassend, eine Versorgung (102) mit heißen inerten Partikeln, eine erste Leitung zur Abführung (103) eines ersten gasförmigen Abgases, das Kohlenwasserstoffverbindungen umfasst, und eine zweite Leitung zur Abführung (107) von verkokten inerten Partikeln, wobei die erste Abführungsleitung (103) optional mit einer ersten Gas-Feststoff-Trennvorrichtung (104) ausgestattet ist, um das erste gasförmige Abgas von den feinen verkokten inerten Partikeln zu trennen,
- ein Redox-basierendes Chemical-Looping (200), eine Reduktionszone (300) umfassend und eine Oxidationszone (400), in der Partikel eines sauerstofftragenden Feststoffs zirkulieren, wobei die Reduktionszone (300) mindestens eine Wirbelschicht umfasst, eine Versorgung (301) aus heißen verkokten inerten Partikeln, die mit der zweiten Abführungsleitung (107) von verkokten inerten Partikeln der thermischen Umwandlungszone (100) verbunden ist, eine Versorgung (302) von sauerstofftragenden Feststoffpartikeln aus der Oxidationszone (400), eine Leitung zur Abführung (303) der mindestens teilweise von Koks befreiten inerten Partikeln, die mit der Versorgung (102) von heißen inerten Partikeln der thermischen Umwandlungszone verbunden ist, eine Leitung zur Abführung (304) der sauerstofftragenden Feststoffpartikel im reduzierten oder teilweise reduzierten Zustand, und eine Versorgung (302) von sauerstofftragenden Feststoffpartikeln, die sich im unteren Teil der Reduktionszone (300) befindet, unter der Versorgung (301) von kokshaltigen inerten Partikeln, und wobei die Oxidationszone (400) mindestens eine Wirbelschicht umfasst, eine Versorgung (401) von oxidierendem Gas, eine Versorgung (402) von Partikeln aus sauerstofftragenden Feststoffen im reduzierten oder teilweise reduzierten Zustand, die mit der Abführungsleitung der Reduktionszone verbunden ist, und eine Leitung zur Abführung (403) der reoxidierten sauerstofftragenden Feststoffpartikel, die mit der Versorgung (302) von sauerstofftragenden Feststoffpartikeln der Reduktionszone verbunden ist.

13. Anlage nach Anspruch 12, mindestens eines der folgenden Merkmale umfassend:

- eine zweite Gas-Feststoff-Trennvorrichtung zum Abtrennen eines zweiten gasförmigen Abgases von den Partikeln eines sauerstoffhaltigen Feststoffs im reduzierten oder teilweise reduzierten Zustand, die sich an der Abführungsleitung der Partikel eines sauerstoffhaltigen Feststoffs im reduzierten oder teilweise reduzierten Zustand der Reduktionszone befindet,
- eine dritte Gas-Feststoff-Trennvorrichtung zum Abtrennen des aus der Oxidationszone austretenden reduzierten oxidierenden Gases von den reoxidierten sauerstofftragenden Feststoffpartikeln, die sich an der Abführungsleitung (403) der reoxidierten sauerstofftragenden Feststoffpartikel der Oxidationszone befindet.

14. Anlage nach Anspruch 13, eine Leitung zum Recycling von sauerstofftragenden Feststoffpartikeln in reduziertem oder teilweise reduziertem Zustand umfassend, die von der zweiten Gas-Feststoff-Trennvorrichtung in Richtung der Versorgung der Reduktionszone stammen.

15. Anlage nach einem der Ansprüche 12 bis 14, einen oder mehrere Wärmetauscher umfassend, ausgewählt aus einem Wärmetauscher (311) zur Kühlung des zweiten gasförmigen Abgases, das aus der zweiten Gas-Feststoff-Trennvorrichtung stammt, und einen Wärmetauscher (105) zur Kühlung der recycelten inerten Partikel in der thermischen Umwandlungszone.

16. Anlage nach einem der Ansprüche 13 oder 14 oder 15, wenn sie von den Ansprüchen 13 oder 14 abhängt, mindestens eines der folgenden Merkmale umfassend:

- mindestens ein Reinigungssystem (312) zum Reinigen des zweiten gasförmigen Abgases, das aus der zweiten Gas-Feststoff-Trennvorrichtung stammt, optional stromabwärts vom mindestens einen Wärmetauscher,
- mindestens ein weiteres System zur Reinigung des reduzierten oxidierenden Gases, das aus der dritten Gas-Feststoff-Trennvorrichtung stammt.

17. Anlage nach einem der Ansprüche 12 bis 16, ferner eine Fraktionierungszone (500) umfassend, die von der ersten Abführungsleitung (103) des ersten gasförmigen Abgases der thermischen Umwandlungszone versorgt wird, optional stromabwärts von der ersten Gas-Feststoff-Trennvorrichtung, wobei die Fraktionierungszone optional mit einer Leitung zum Recycling (501) einer nicht kondensierbaren gasförmigen Fraktion ausgestattet ist, die die thermische Umwandlungszone versorgt.

## Claims

1. A method for converting a heavy hydrocarbon feedstock into a lighter hydrocarbon stream and coke by thermal conversion and coke conversion by combustion in a redox chemical loop wherein:

- a thermal conversion of the heavy hydrocarbon feedstock is carried out in a thermal conversion zone by bringing it into contact with hot inert particles to produce, in the absence of dioxygen and a catalyst, optionally in the presence of water vapour and/or dihydrogen, a first gaseous effluent of hydrocarbon compounds and coke, the latter being deposited on the inert particles,
- the coked inert particles are discharged from the thermal conversion zone and are sent to a reduction zone of a redox chemical loop in which particles of an oxygen-carrying solid flow,

- a combustion of the coke deposited on the discharged coked inert particles is carried out in the reduction zone to produce a second gaseous effluent, hot inert particles at least partially freed from coke and oxygen-carrying solid particles in the reduced or partially reduced state, the oxygen-carrying solid particles having a particle size sufficiently smaller than that of the inert particles and/or an average diameter and/or a density such that they are lighter than the inert particles and that the oxygen-carrying solid particles in the reduced or partially reduced state form a bed located above a bed formed by the inert particles in the reduction zone,

- the oxygen-carrying solid particles in the reduced or partially reduced state are discharged from the reduction zone and at least partially returned to an oxidation zone of the chemical loop to oxidise them by means of an oxidising gas before reintroducing them into the reduction zone,

- the hot inert particles which are at least partially freed from coke are discharged from the reduction zone and at least partially returned to the thermal conversion zone, the energy necessary for the thermal conversion reaction being at least partially provided by the exothermic combustion of all or part of the coke in the reduction zone.

2. The method according to claim 1, wherein the second gaseous effluent produced in the reduction zone is recovered and separated from the oxygen-carrying solid particles in the reduced or partially reduced state.

3. The method according to claim 2, wherein the second gaseous effluent, produced in the reduction zone and separated from the oxygen-carrying solid particles in the reduced or partially reduced state, is cooled in at least one heat exchanger by heat exchange with a fluid, for example water in liquid form, and, optionally, the heated fluid is used to generate thermal or electrical energy.

4. The method according to any one of claims 1 to 3, wherein the hot inert particles form a non-entrained bed in the thermal conversion zone passed through by the flowing heavy feedstock.

5. The method according to any one of claims 1 to 4, wherein the first gaseous effluent originating from the thermal conversion zone is subjected, optionally directly, to fractionation in a fractionation zone, optionally after separation of coked inert particle fines.

6. The method according to claim 5, wherein the fractionation zone separates the first gaseous effluent at least into an incondensable gaseous fraction and a liquid fraction, and, optionally, at least one portion of said incondensable gaseous fraction is returned to the thermal conversion zone.

7. The method according to any one of claims 1 to 6, wherein the oxygen-carrying solid particles in the reduced or partially reduced state originating from the reduction zone and separated from the second effluent, are partially recycled in the reduction zone.

8. The method according to any one of claims 1 to 7, wherein the hot inert particles, which are at least partially freed from coke, are cooled before they are returned to the thermal conversion zone in a heat exchanger by heat exchange with a fluid, for example water in liquid form.

9. The method according to any one of claims 1 to 8, wherein at least one fluid selected from:

- the second gaseous effluent after separation of the oxygen-carrying solid particles in the reduced or partially reduced state and optionally after cooling,
- the oxidising gas reduced during the re-oxidation of the oxygen-carrying solid particles after separation of the re-oxidised oxygen-carrying solid particles,

is subjected to a purification treatment.

10. The method according to any one of claims 1 to 9, wherein the heavy hydrocarbon feedstock is selected from hydrocarbon feedstocks with high sulphur content, atmospheric residues, vacuum residues, alone or in combination.

11. The method according to any one of claims 1 to 10, comprising one or more of the following features:

- a particle size of the oxygen-carrying solid particles which is sufficiently lower than that of the inert particles, optionally lower by a factor from 1 to 1000,
- an average diameter of the oxygen-carrying solid particles and inert particles from 50 $\mu$m to 2mm,

- a density of oxygen-carrying solid particles and inert particles from 500 to 6000 kg/m3,
- a superficial velocity of a fluidisation gas of the reduction zone from 30 to 300% of the terminal average fall velocity of the inert particles.

12. An installation for converting a heavy hydrocarbon feedstock for implementing the method according to any one of claims 1 to 11, comprising at least:

- one thermal conversion reaction zone (100), devoid of supply of dioxygen and catalyst, optionally equipped with a supply of water vapour and/or dihydrogen, comprising a supply (101) of heavy hydrocarbon feedstock, a supply (102) of hot inert particles, a first conduit (103) for discharging a first gaseous effluent comprising hydrocarbon compounds and a second conduit (107) for discharging coked inert particles, the first discharge conduit (103) being optionally equipped with a first gas-solid separation device (104) to separate the first gaseous effluent from the coked inert particle fines,
- one redox chemical loop (200) comprising a reduction zone (300) and an oxidation zone (400) in which particles of an oxygen-carrying solid flow, the reduction zone (300) comprising at least one fluidised bed, a supply (301) of hot coked inert particles connected to the second conduit (107) for discharging coked inert particles from the thermal conversion zone (100), a supply (302) of oxygen-carrying solid particles originating from the oxidation zone (400), a conduit (303) for discharging the inert particles, which are at least partially freed from coke, connected to the supply (102) of hot inert particles of the thermal conversion zone, a conduit (304) for discharging the oxygen-carrying solid particles in the reduced or partially reduced state, a supply (302) of oxygen-carrying solid particles being located in the lower portion of the reduction zone (300), under the supply (301) of coked inert particles,

and

the oxidation zone (400) comprising at least one fluidised bed, a supply (401) of oxidising gas, a supply (402) of oxygen-carrying solid particles in the reduced or partially reduced state connected to the discharge conduit of the reduction zone and a conduit (403) for discharging the re-oxidised oxygen-carrying solid particles connected to the supply (302) of oxygen-carrying solid particles of the reduction zone.

13. The installation according to claim 12, comprising at least one of the following features:

- a second gas-solid separation device for separating a second gaseous effluent from the oxygen-carrying solid particles in the reduced or partially reduced state located on the conduit for discharging the oxygen-carrying solid particles in the reduced or partially reduced state from the reduction zone,
- a third gas-solid separation device for separating the reduced oxidising gas exiting the oxidation zone from the re-oxidised oxygen-carrying solid particles located on the conduit (403) for discharging the re-oxidised oxygen-carrying solid particles from the oxidation zone.

14. The installation according to claim 13, comprising a conduit for recycling oxygen-carrying solid particles in the reduced or partially reduced state originating from the second gas-solid separation device to the supply of the reduction zone.

15. The installation according to any one of claims 12 to 14, comprising one or more heat exchangers selected from a heat exchanger (311) to cool the second gaseous effluent originating from the second gas-solid separation device and a heat exchanger (105) to cool the recycled inert particles in the thermal conversion zone.

16. The installation according to any one of claims 13 or 14 or 15 when it depends on claims 13 or 14, comprising at least one of the following features:

- at least one purification system (312) to purify the second gaseous effluent originating from the second gas-solid separation device, optionally downstream of said at least one heat exchanger,
- at least one other system for purifying the reduced oxidising gas originating from the third gas-solid separation device.

17. The installation according to any one of claims 12 to 16, further comprising a fractionation zone (500) supplied by the first conduit (103) for discharging the first gaseous effluent from the thermal conversion zone, optionally downstream of the first gas-solid separation device, the fractionation zone being optionally equipped with a conduit (501) for recycling an incondensable gaseous fraction supplying the thermal conversion zone.

Fig.1

EP 4 085 119 B1

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5792340 A
- US 2004069682 A1
- US 2004069686 A1
- WO 2014140175 A1
- US 10125323 B
- US 9707532 B
- FR 2930733 B1